# EUROPÄISCHE PATENTSCHRIFT

(11) **EP 2 226 851 B1**
(45) Veröffentlichungstag und Bekanntmachung des Hinweises auf die Patenterteilung: **12.03.2014**
(21) Anmeldenummer: 10150550.1
(22) Anmeldetag: 12.01.2010
(51) Int. Cl.: H01L 31/048, C08G 18/10, C09J 175/04, C09J 183/04, C09J 7/00, C09J 5/08

(54) **Klebeband, insbesondere zur Verklebung von Photovoltaik-Modulen**
Adhesive tape, in particular for gluing photovoltaic modules
Bande adhésive, notamment destinée au collage de modules photovoltaïques

(30) Priorität: 04.03.2009 DE 102009011163
(43) Veröffentlichungstag der Anmeldung: 08.09.2010
(73) Patentinhaber: TESA SE, 20253 Hamburg (DE)
(72) Erfinder: Burmeister, Axel, 21244, Buchholz (DE); Zmarsly, Franziska, 21075, Hamburg (DE); Utesch, Nils Dr., Hua Cao Town, Minhang District 201107 Shanghai (CN)

(56) Entgegenhaltungen:
- EP-A1- 1 724 319
- EP-A1- 1 944 345
- WO-A2-2010/002787

## Beschreibung

Die Erfindung betrifft ein Verfahren zur Verklebung von Photovoltaik-Modulen.

Photovoltaik-Module (PV-Modul) sind besondere optoelektronische Bauteile. Unter Photovoltaik (PV) versteht man die direkte Umwandlung von Strahlungsenergie, vornehmlich Sonnenenergie, in elektrische Energie mit Hilfe von Solarzellen. Solarzellen gibt es in verschiedenen Ausführungsformen am weitesten verbreitet sind Dickschicht-Siliziumzellen entweder als monokristalline Zellen (c-Si) oder multikristalline Zellen (mc-Si). Vermehrt Verbreitung finden Dünnschichtzellen aus amorphem Silizium (a-Si), GaAs (Galliumarsenid), CdTe (Cadmiumtellurid), CIS (Kupfer, Indium, Selen), CIGS (Kupfer, Indium, Gallium, Selen), sowie organische Solarzellen und Farbstoffzellen.

Solarzellen werden zur Energiegewinnung meist zu großen Solarmodulen, den sog. PV-Modulen verschaltet. Die Zellen werden dafür mit Leiterbahnen an Vorder- und Rückseite in Reihe geschaltet. Dadurch addiert sich die Spannung der Einzelzellen. Zudem werden die Solarzellen üblicherweise als Laminat verarbeitet, insbesondere nämlich ober- und unterseitig mit einem Barrierematerial (Glas, Folien, etc.) versehen.

Die Fertigung eines Solarmoduls erfolgt häufig mit der optisch aktiven Seite nach unten. Regelmäßig wird dabei ein entsprechendes Glas gereinigt und bereitgelegt. Bei dem Glas handelt es sich üblicherweise um eisenarmes, gehärtetes Weißglas in 3 bis 4 mm Stärke mit möglichst geringer Absorption zwischen 350 nm und 1150 nm. Auf dieses Glas kommt dann eine zugeschnittene Bahn Ethylenvinylacetat-Folie (EVA-Folie). Die Solarzellen werden mittels Lötbändchen zu einzelnen Strängen (so genannte Strings) verbunden und auf der Oberseite dieser EVA-Folie positioniert. Nun werden die Querverbinder, die die einzelnen Strings miteinander verbinden sollen und zum Ort der Anschlussdose führen, positioniert und verlötet. Anschließend wird alles nacheinander mit zugeschnittenen EVA- und Polyvinylfluorid-Folien (z.B. Tedlar™) oder einem Verbund aus EVA, Polyester und Polyvinylfluorid bedeckt. Als nächster Produktionsschritt erfolgt das Laminieren des Moduls bei einem Unterdruck von ca. 20 mbar und ca. 150°C. Beim Laminieren bildet sich aus der bis dahin milchigen EVA-Folie eine klare, dreidimensional vernetzte und nicht mehr schmelzbare Kunststoffschicht in der die Solarzellen eingebettet sind und welche fest mit der Glasscheibe und der Rückseitenfolie verbunden ist. Nach dem Laminieren werden die Kanten gesäumt, die Anschlussdose gesetzt und mit Freilaufdioden bestückt. Damit ist das Laminat fertig.

PV-Module werden aus Stabilitätsgründen mit einem Rahmen, insbesondere einem Aluminiumrahmen, versehen, welcher zum einen der Montage und zum anderen dem Schutz der PV-Module vor Bruch durch zu starke Biegung dient. Die Verbindung zwischen Rahmen und dem Laminat, welches üblicherweise das Glas, Polymerfolien, Rückseitenfolie und Solarzellen umfasst, wird beispielsweise durch die Applikation eines doppelseitigen Schaumstoffklebebandes gelöst. Dieses wird üblicherweise auf die Laminatkante verklebt und optional auch noch auf die Laminatunter- und/oder die Laminatoberseite umgeschlagen und dort angedrückt. Das so ausgerüstete Laminat wird dann mit sehr hoher Kraft in die Rahmennut gepresst. Das empfindliche Laminat ist, wie zuvor bereits beschrieben, regelmäßig an der Oberseite, also der optisch aktiven Seite, durch eine Glasschicht gegen Wasserdampf bzw. Wasser geschützt und an der Unterseite entweder durch eine zweite Glasschicht oder eine Folie bzw. einen Folienverbund mit Barrierewirkung. Die Laminatkanten sind hingegen nur durch das Schaumstoffklebeband gegen den Eintritt von Wasser geschützt. Mit wachsender Größe der PV-Module, insbesondere von nachgeführten Movermodulen, also Modulen, die mittels Motoren dem Sonnenstand nachgeführt werden, wird eine immer größere Kraft erforderlich, um die Laminate in die Rahmen zu pressen. Besonders kritisch ist das Verpressen in den Kantenbereichen des Laminats - durch die Umschlagung oder Überlappung liegt das Klebeband hier mit doppelter Dicke vor. Beim Einpressen kann das Klebeband daher beschädigt werden, wodurch Risse im Schaum entstehen können, durch welche wiederum Regenwasser an die Laminatkante dringen kann. und die empfindlichen Laminate durch Korrosion der Lötverbindungen der Zellverbinder oder durch Unterwandern der Glas/ EVA-Grenzschicht stören oder gar zerstören kann. Der Prozess des Rahmens mit einem doppelseitigen Schaumstoffklebeband erweist sich als sehr zeitaufwendig und schwer automatisierbar.

Die Verbindung zwischen Rahmen und dem Laminat kann alternativ durch das Einbringen von vernetzbaren Flüssigsilicon oder einen Flüssigklebstoff in die Rahmennut bewerkstelligt werden. Dies wiederum hat den Nachteil, dass das hervorquellende Silicon oder der Flüssigklebstoff aufwendig entfernt werden muss.

Der vorliegenden Erfindung liegt damit das Problem zugrunde, die Montage eines Photovoltaik-Moduls zu vereinfachen, insbesondere durch eine maschinelle Applikation der Klebemasse und/oder die Einbringung des Laminats in den PV-Rahmen mit nur geringem Druck. Ferner sollen Fehlstellen bei der Verbindung von Rahmen und Laminat insbesondere auch im Bereich der Rahmenecken vermieden werden.

Gelöst wird diese Aufgabe durch ein Verfahren gemäß Anspruch 1. Bevorzugte Ausgestaltungen und Weiterbildungen sind Gegenstand der jeweiligen Unteransprüche.

Es wird ein Klebeband vorgeschlagen, welches sich zum einen einfach applizieren lässt, zum anderen die Rahmenmontage vereinfacht und zudem einen ähnlich guten Schutz der Laminatkante vor dem Eindringen von Wasser/Wasserdampf gewährleistet wie die aufwendige Versiegelung mit vernetzbaren Flüssigsilicon.

Von besonderer Bedeutung für die Erfindung ist die Erkenntnis, dass nicht auf Flüssigkleber, insbesondere Flüssigsiliconkleber, zur Verklebung von Laminat und Rahmen zurückgegriffen werden muss, um eine relativ hohen Druck beim Zusammenfügen zu vermeiden. Vielmehr kann auch ein Klebeband verwendet werden, wenn dies nur richtig ausgebildet ist. Das Problem bei der Verwendung eines herkömmlichen Klebebandes besteht darin, dass die Dicke des Klebebandes und die Dicke des Laminats zusammen den Rahmen so weit ausfüllen müssen, dass das Klebeband vollflächigen Kontakt zum Laminat einerseits und zum Rahmen andererseits hat. Um dies zu gewährleisten, wird bislang die Schaumstoffschicht eingesetzt, die eine gewisse Flexibilität aufbringt.

Vorliegend wurde nun erkannt, dass die lichte Weite des Rahmens nicht bereits beim Einfügen des Laminats in den Rahmen voll ausgefüllt sein muss. Vielmehr ist es ausreichend, wenn die Lichte Weite anschließend so ausgefüllt wird, dass das Klebeband sowohl mit dem Rahmen als auch mit dem Laminat vollflächig in Kontakt steht. Es wurde nun erkannt, dass dies realisierbar ist durch die Verwendung eines Klebebandes, insbesondere eines Siliconklebebandes,
welches mindestens eine aufschäumbare Schicht enthält. Durch das Aufschäumen wird dann nachträglich die Dicke des Klebebandes erhöht und der Rahmen durch Klebeband und Laminat vollständig ausgefüllt.

Für den Fachmann ist dabei überraschend, dass die Verbindungsfestigkeit zwischen Rahmen und Laminat im Vergleich zur Verklebung mit einem herkömmlichen Schaumklebeband gleich oder sogar größer ist, obwohl die Einpresskraft des Laminats in den Rahmen geringer ist.

Ein derartiges Klebeband hat zudem den Vorteil, dass es selbst leicht applizierbar ist und der andernfalls für das Einfügen des Laminats hohe Druck vermieden werden kann.

Die Möglichkeit des Aufschäumens des Klebebandes wird durch die Einarbeitung eines Schäumungsmittels in die die Klebeschicht bildende Polymerschicht des Klebebandes erzielt. Unter dem Begriff Klebeband wird vorliegend ein flächiger Klebeartikel verstanden, also auch ein Klebeartikel mit begrenzten Abmessungen, wie z.B. ein Stanzling. Um ein Klebeband handelt es sich insbesondere auch bei einem Gebilde, das lediglich aus einer Klebeschicht besteht, also einem Transferklebeband. Das Klebeband kann aber auch als Flächengebilde mit einem Träger, einer oberen und einer unteren Klebeschicht und ggf. noch weiteren Funktionsschichten ausgebildet sein.

Besonders bevorzugt ist eine Ausgestaltung des Klebebandes derart, dass die das Schäumungsmittel enthaltende Polymerschicht nach dem Aufschäumen (und nicht im Rahmen montiert und zusammen gepresst) eine Schichtdicke im Bereich von etwa 100 µm bis etwa 3000 µm aufweist. Dies ist in der Regel ausreichend, um eine hinreichende Verklebung des Laminats in dem Rahmen zu erzielen.

Das Klebeband kann grundsätzlich zunächst auf das Laminat aufgebracht und dann mit dem Laminat in den Rahmen eingefügt werden oder aber vor dem Laminat in den Rahmen eingebracht werden.

In bevorzugter Ausgestaltung des Verfahrens wird das ungeschäumte, vorzugsweise mit einer Releasefolie oder einem Releasepapier abgedeckte Klebeband während der Herstellung des Rahmenprofils in die für das Laminat vorgesehene Nut gepresst. Insbesondere erfolgt dies beim Vorgang des Strangpressens des Rahmenprofils. Weiter bevorzugt ist dann, dass anschließend der Rahmen mit dem Klebeband gemeinsam auf die gewünschte Länge abgelängt, insbesondere abgesägt wird. Der ausgerüstet Rahmen wird nach Entfernung der Releasefolie von dem Klebeband einfach auf das Laminat geschoben. Die geringe Dicke des Klebebandes ermöglicht es, dass die Lücke zwischen den Klebebandseiten größer ist, als die Dicke des Laminats. Dadurch kann das Laminat ohne oder mit nur geringem Kraftaufwand in die mit Klebeband ausgerüstete Nut des Aluprofils geschoben werden. Nach dem Verschrauben der Rahmenteile miteinander, wird das Klebeband durch einen kurzen Temperaturstoß, von vorzugsweise mindestens 100°C, weiter vorzugsweise von mindestens 150°C, besonders bevorzugt von mindestens 180°C, zum Aufschäumen gebracht und füllt so die Freiräume zwischen Nut und Laminat zur Gänze aus. Die Rahmenecken werden vollständig ausgeschäumt und es kann insbesondere auch in den Ecken zu keinem Wassereintritt kommen.

Als Schäumungsmittel eignen sich insbesondere Mikroballons, die in einer Polymerschicht, insbesondere einer Klebeschicht, enthalten sind. Mittels Mikroballons geschäumte (Selbst-)Klebemassen sind seit langem bekannt und beschrieben (DE 10 2004 037 910 A1). Sie zeichnen sich durch eine definierte Zellstruktur mit einer gleichmäßigen Größenverteilung der Schaumzellen aus. Es sind geschlossenzellige Mikroschäume ohne Kavitäten, wodurch im Vergleich zu offenzelligen Varianten eine bessere Dichtung empfindlicher Güter gegen Staub und flüssige Medien erzielt werden kann.

Bei Mikroballons handelt es sich insbesondere um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Durch ihre flexible, thermoplastische Polymerschale besitzen derartige Schäume eine höhere Anpassungsfähigkeit als solche, die mit nicht expandierbaren, nicht polymeren Mikrohohlkugeln (wie z.B. Glashohlkugeln) gefüllt sind. Ferner eignen sich derartige Schäume besser zum Ausgleich von Fertigungstoleranzen, wie sie zum Beispiel bei Spritzgussteilen die Regel sind und können aufgrund ihres Schaumcharakters auch thermische Spannungen sowie Schock und Vibrationen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für PSA-Schäume kombiniert werden.

Klassisch chemisch oder physikalisch geschäumte Materialien sind demgegenüber für ein irreversibles Zusammenfallen unter Druck und Temperatur anfälliger. Auch die Kohäsionsfestigkeit ist hier niedriger.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 µm bis 45 µm Durchmesser im unexpandierten Zustand) und ihre zur Expansion benötigten Starttemperatur (75°C bis 220 °C) differenzieren. Wenn der Mikroballontyp beziehungsweise die Schäumungstemperatur auf das zur Massecompoundierung benötigte Temperaturprofil und die Maschinenparameter abgestimmt ist, kann die Massecoumpondierung und Beschichtung so durchgeführt werden, das die Mikroballons bei der Verarbeitung nicht aufschäumen und ihr gesamtes Expansionspotential für die Anwendung erhalten bleibt.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Schäumung von Klebemassen besonders geeignet.

Grundsätzlich eignen sich alle Arten von Klebemassen, insbesondere Haftklebemassen, für die Anwendung in Solarmodulen, die für den Außeneinsatz geeignet sind und den entsprechenden Umweltbedingungen standhalten. Als besonders geeignet haben sich Klebemassen auf Basis von Acrylaten sowie auf Basis der meisten Synthesekautschuke gezeigt. Weiter haben sich als besonders geeignet Klebemassen auf Basis von Poly(diorgano)siloxanen (Siliconen) sowie feuchtigkeitsvernetzende siliylierte Polyurethan(PU)-Haftklebemassen herausgestellt.

Als Haftkleber für die Außenschichten geeignet sind zum Beispiel solche auf Basis von Polyisobutylen, Butylkautschuk hydrierten Styrolblockcopolymeren, spezielle Polyolefine, Lösungsmittel- und Hotmelt-Acrylatpolymerisate

Die Haftklebemasse kann durch chemische Vernetzung und/oder durch Elektronen- und/oder UV-Bestrahlung, vernetzt werden.

In einer besonderen Ausführungsform basiert die Klebemasse der Klebeschichten auf Polyisobutylen als Basispolymer. Um der Klebemasse die erforderliche Anfassklebrigkeit zu verleihen, wird sie mit Harzen gemischt. Als elastomerer Bestandteil wird bevorzugt eine Mischung eines mittelmolekularen Polyisobutylens, vorzugsweise mit einem Molekulargewicht im Bereich 20.000 bis 60.000, mit einem höhermolekularen Polyisobutylen, vorzugsweise mit einem Molekulargewicht größer 1.500.000, weiter vorzugsweise größer 2.000.000 verwendet. Als bislang scherfesteste Ausführung hat es sich erwiesen als mittelmolekulare Polyisobutylenkomponente eine Type mit einem mittleren Molekulargewicht von 40.000 zu nehmen, welches unter der Typenbezeichnung "Oppanol B10" von der Firma BASF im Handel frei erhältlich ist, und als hochmolekulare Polyisobutylenkomponente eine Type mit einem mittleren Molekulargewicht von 2.600.000 zu nehmen, welches unter der Typenbezeichnung "Oppanol B150" ebenfalls frei erhältlich ist. Es wird eine ähnliche Eignung von Produkten aus der "Vistanex"-Familie der Firma Exxon vermutet. Als Harze finden Kolophonium- und/oder Polyterpen- und/oder andere Kohlenwasserstoffharze Verwendung.

Als Haftklebemassen finden bevorzugt solche auf Basis von Blockcopolymeren enthaltenden Polymerblöcke gebildet von Vinylaromaten (A-Blöcke), wie zum Beispiel Styrol, und solchen gebildet durch Polymerisation von 1,3-Dienen (B-Blöcke), wie zum Beispiel Butadien und Isopren oder einem Copolymer aus beidem, Anwendung. Es können auch Mischungen unterschiedlicher Blockcopolymere zum Einsatz kommen. Die Blockcopolymere können zum Teil oder vollständig hydriert sein. Zudem können die Blockcopolymere lineare A-B-A Struktur aufweisen. Einsetzbar sind ebenfalls Blockcopolymere von radialer Gestalt sowie sternförmige und lineare Multiblockcopolymere. Als weitere Komponente werden A-B Zweiblockcopolymere eingesetzt, wobei der Anteil an Zweiblockcopolymeren am gesamten Elastomergehalt mindestens 50% beträgt. Vorzugsweise werden solche Blockcopolymere eingesetzt, die einen Polystyrolgehalt von über 20% besitzen.

Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als Klebrigmacher dienen vorzugsweise Klebharze, die mit dem Elastomerblock der Styrolblockcopolymere verträglich sind. Geeignete Klebharze sind vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, oder besonders bevorzugt Polyterpenharze auf Basis von α-Pinen und/oder β-Pinen und/oder δ-Limonen. Vorgenannte Klebharze können sowohl allein als auch im Gemisch eingesetzt werden.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockerstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α -Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

In einer weiteren bevorzugten Ausführungsform besteht die Polymerschicht aus Acrylat. Diese zeichnen sich durch hohe Alterungsstabilität, sehr hohe Verklebungswerte und geringe Absorption aus. Vorzugsweise basiert die Klebemasse auf Acrylat- oder Polyethylenvinylacetatpolymeren.

Acrylatdispersionen sind bekannt und werden sowohl für Klebemassen von Klebebändern als auch für Klebemassen von Etiketten in großen Mengen eingesetzt. Die Acrylatdispersionen enthalten Partikel aus Acrylatpolymeren, die dispers in der wässrigen Phase der Dispersion verteilt sind. Die Herstellung von Acrylatdispersionen erfolgt üblicherweise in wässrigem Medium durch Polymerisation geeigneter Monomere. Die Herstellung kann sowohl mittels Batchprozess als auch durch Zudosierung einer oder mehrerer Komponenten während der Polymerisation erfolgen. Beim Batchprozss werden alle benötigten Komponenten gleichzeitig vorgelegt.

Die Eigenschaften der Acrylatdispersionen und der entsprechenden Klebemassen wird überwiegend durch die Auswahl der Monomere und das erzielte Molekulargewicht bestimmt. Die wichtigsten Monomere sind n-Butylacrylat, 2-Ethylhexylacrylat und Acrylsäure. Geeignete Monomerbausteine sind beschrieben in "Acrylic Adhesives", Donatas Satas in Handbook of Pressure Sensitive Adhesive Technology, Second Edition, edited by Donatas Satas, Van Nostrand Reinhold New York, pp. 396-456.

Verwendete Acrylatdispersionen enthalten insbesondere [jeweils Gew.-%]
0 bis 10 % Acrylsäure-Einheiten
0 bis 100 % n-Butylacrylat-Einheiten
0 bis 100 % 2-Ethylhexylacrylat-Einheiten.

In einer bevorzugten Ausführung werden Acrylatdispersionen mit 0,5 bis 3 % Acrylsäure-Einheiten verwendet. In einer weiteren bevorzugten Ausführung werden Acrylatdispersionen mit 0,5 bis 3 % Acrylsäure-Einheiten und 99,5 bis 90 %, besonders bevorzugt 99,5 bis 96 %, n-Butylacrylat-Einheiten verwendet. Ein weiteres Beispiel für erfindungsgemäße Acrylatdispersionen sind Acrylatdispersionen mit 80 bis 90 % 2-Ethylhexylacrylat-Einheiten und 8 bis 20 % n-Butylacrylat-Einheiten.

Die Acrylatdispersionen können zusätzlich weitere Monomer-Einheiten enthalten, durch die beispielsweise die Glasübergangstemperatur und die Vernetzbarkeit gesteuert werden kann. Beispiele sind Methylacrylat, Ethylacrylat, Methylethylacrylat, Maleinsäureanhydrid, Acrylamid, Glycidylmethacrylat, Isopropylacrylat, n-Propylacrylat, Isobutylacrylat, n-Octylacrylat sowie die entsprechenden Methacrylate dieser Acrylate. Die Acrylatdispersionen enthalten üblicherweise 0 bis 10 % dieser zusätzlichen Monomereinheiten, entweder werden ausschließlich eine zusätzliche Monomereinheit oder Mischungen derselben verwendet.

Die erzielte Glasübergangstemperatur hängt von den eingesetzten Monomeren ab. Die für die erfindungsgemäßen Klebemassen verwendeten Acrylatdispersionen weisen im getrockneten Zustand Glasübergangstemperaturen insbesondere zwischen -80 °C und - 15 °C, bevorzugt zwischen -75 °C und -25 °C und besonders bevorzugt zwischen -55 °C und -35 °C auf.

Der Feststoffgehalt der Acrylatdispersionen liegt insbesondere zwischen 30 und 70 Gew.-%, bevorzugt zwischen 45 und 60 Gew.-%. Beispielhaft seien die Acrylatdispersionen Primal PS 83d, Primal PS 90 der Firma Rohm & Haas genannt.

Falls erwünscht, kann die Dispersion weitere Zusätze enthalten. Geeignete Vernetzungsmittel können Epoxydharze, Aminderivate wie beispielsweise Hexamethoxymethylmelamin und/ oder Kondensationsprodukte von einem Amin, zum Beispiel Melamin, Harnstoff mit einem Aldehyd, zum Beispiel Formaldehyd sein. Um nicht klebende Polyacrylatdispersionen zu erhalten hat sich gezeigt, dass es günstig ist weitere Stoffe gegebenenfalls zuzugeben, die zum Beispiel mit den Carboxylgruppen des Polymers reagieren. Beispiele dafür sind Aziridine, wie Ethylenimin, Propylenimin.

Die zur Herstellung der Klebebänder verwendeten Klebemassen können weitere Komponenten enthalten. Beispiele sind Harze, Weichmacher, Farbstoffe, Entschäumer und Verdickungsmittel sowie weitere Zuschlagstoffe zum Einstellen des gewünschten rheologischen Verhaltens. Modifikationen von Acrylatdispersionen sind bekannt und beispielsweise beschrieben in "Modification of Acrylic Dispersions", Alexander Zettl in Handbook of Pressure Sensitive Adhesive Technology, Second Edition edited by Donatas Satas, Van Nostrand Reinhold New York, pp. 457 -493.

Wässrige Harzdispersionen, dass heißt Dispersionen von Harz in Wasser, sind bekannt. Herstellung und Eigenschaften sind beispielsweise beschrieben in "Resin Dispersions", Anne Z. Casey in Handbook of Pressure Sensitive Adhesive Technology, Second Edition, edited by Donatas Satas, Van Nostrand Reinhold New York, pp. 545 - 566. Harzdispersionen von Kohlenwasserstoffharzen und modifizierten Kohlenwasserstoffharzen sind ebenfalls bekannt und werden beispielsweise von Firma Hercules BV unter dem Handelsnamen Tacolyn angeboten (Beispiel Tacolyn 4177).

Geeignet sind Harzdispersionen auf Basis von Kohlenwasserstoffharzen oder modifizierten Kohlenwasserstoffharzen mit einem Erweichungspunkt zwischen 50 °C und 100 °C. Die Klebemasse kann beispielsweise 5 bis 28 Gew.-% der Harzdispersionen enthalten. Der Feststoffgehalt der Harzdispersionen liegt üblicherweise zwischen 40 und 70%.

Der Klebemasse können Harzdispersionen auf Basis von Mischungen verschiedener Kohlenwasserstoffharze, sowie von Mischungen von Kohlenwasserstoffharzen mit anderen bekannten Harzen, zugegeben werden. Möglich sind beispielsweise Mischungen von Kohlenwasserstoffharzen mit geringen Mengen von Harzen auf Basis von Kolophonium oder modifiziertem Kolophonium oder Phenolharzen, anderen Naturharzen, Harzestern oder Harzsäuren.

Der Klebemasse können weiterhin weichmachende Komponenten wie Weichharze, Flüssigharze, Öle oder andere bekannte Komponenten wie beispielsweise alkoxylierte Alkylphenole zugegeben werden. Alkoxylierte Alkylphenole sind bekannt und beispielsweise beschrieben in US 4,277,387 A und EP 0 006 571 A. Die Verwendung von alkoxylierten Alkylphenolen als Weichmacher wurde u.a. vorgeschlagen in "Modification of Acrylic Dispersions", Alexander Zettl in Handbook of Pressure Sensitive Adhesive Technology, Second Edition, edited by Donatas Satas, Van Nostrand Reinhold New York, p. 471.

Die Eigenschaften der alkoxylierten Alkylphenole werden durch den Alkylrest und überwiegend durch den Aufbau der Polyglykoletherkette bestimmt. Bei der Herstellung kann sowohl Ethylenoxid als auch Propylenoxid verwendet werden. In einer besonderen Ausführung wird propoxyliertes Alkylphenol verwendet. Bevorzugt sind wasserunlösliche alkoxylierte Alkylphenole. Weiterhin bevorzugt sind alkoxylierte Alkylphenole mit einem Siedepunktpunkt größer 100 °C, bevorzugt größer 130 °C und besonders bevorzugt größer 200 °C.

Die Klebemasse kann durch Einsatz von Vernetzern in Richtung auf höhere Scherfestigkeit optimiert werden. Auswahl und Anteil der Vernetzer ist dem Fachmann bekannt. Vernetzer für Acrylatdispersionen sind grundsätzlich bekannt und beispielsweise beschrieben in "Acrylic Adhesives", Donatas Satas in Handbook of Pressure Sensitive Adhesive Technology, Second Edition, edited by Donatas Satas, Van Nostrand Reinhold New York, pp. 411 bis 419.

Vernetzer auf Basis von Isocyanat sind grundsätzlich geeignet, aber wegen der begrenzten Topfzeiten und des erhöhten Aufwands bezüglich Arbeitssicherheit nicht bevorzugt. Ein Beispiel für Vernetzer auf Basis von Isocyanat ist Basonat F DS 3425 X (BASF).

Bevorzugt sind isocyanatfreie Vernetzer, beispielsweise Vernetzer auf Basis von Salzen mehrfunktioneller Metalle. Diese sind grundsätzlich bekannt und werden beispielsweise in US 3,740,366 A, US 3,900,610 A, US 3,770,780 A und US 3,790,553 A beschrieben. Besonders geeignet sind Vernetzer auf Basis von Zinkkomplexen, die mit Carboxylgruppen kovalente und/oder komplexartige Bindungen ausbilden können.

(Wie bereits zuvor beschrieben wurde, eignen sich insbesondere Klebemassen auf Basis von Poly(diorgano)siloxanen (Silicone). Diese Klebemassen halten den beim Außeneinsatz auftretenden Umwelteinflüssen besonders gut stand und stellen selbst bereits eine Barriere gegenüber Permeanten bereit.

Poly(diorgano)siloxane (Silicone) weisen aufgrund der sehr stabilen Si-O Bindung eine exzellente Widerstandsfähigkeit gegenüber Umwelteinflüssen wie UV Licht, Ozon, Chemikalien und hohen Temperaturen auf und haben somit extrem hohe Lebenszyklen. Darüber hinaus bleiben Silicone aufgrund des niedrigen TG von bis zu -120°C auch noch bei Temperaturen von -70°C flexibel und verarbeitbar und zeigen zudem exzellente Absorptionseigenschaften gegenüber Erschütterungen, Vibrationen, Lärm und Temperatureinflüssen. Die unpolaren organischen Reste (z.B. Methyl- oder Phenylgruppen) des Si-O Polymerrückgrats führen zu einer exzellenten Hydrophobie der Silicone, die in einer äußerst geringen Wasseraufnahmefähigkeit resultiert.

Siliconhaftklebmassen bestehen aus Poly(diorgano)siloxanen (z.B. PDMS: Polydimethylsiloxan) und Silikatharzen (MQ Harz). Aufgrund derselben chemischen Natur zeigen Siliconhaftklebemassen die gleichen physikalischen Eigenschaften und chemischen Resistenzen wie reine Silicone (z. B. vernetzbare Flüssigsilicone). Silicone eignen sich daher für Anwendungsbereiche mit besonders großer Belastung durch Temperaturschwankungen. Sie weisen neben einer hohen UV- und Ozonbeständigkeit, insbesondere die kombinierten Funktionen aus hoher Temperaturbeständigkeit, Elastizität und ausgeprägtem Dämpfungsverhalten gegenüber Schockeinflüssen und Vibrationen. Darüber hinaus haben Langzeittemperaturbelastungen im Bereich von - 75 °C bis 260°C keinen negativen Einfluss auf die Materialeigenschaften von Siliconen.

Für die Anwendung von Klebebändern kommen diese herausragenden Materialeigenschaften vorteilhaft zum Tragen, wenn eine Siliconhaftklebemasse mit Mikroballons gefüllt und somit schäumbar wird. Insbesondere vorteilhaft ist eine Ausgestaltung in der Art, dass die Siliconhaftklebemasse im Zuge des Schäumungsprozesses vernetzt wird. Weiterhin ist es insbesondere vorteilhaft, wenn die durch Mikroballons schäumbare Siliconhaftklebemasse in einem doppelseitigen Klebeband verwendet wird, dessen Träger eine Barrierefolie ist. Die zweite Seite der Barrierefolie wird dabei bevorzugt ebenfalls mit einer Siliconhaftklebemasse beschichtet. Für die Wahl geeigneter Siliconhaftklebemassen stehen sowohl kondensationsvernetzende Siliconhaftklebmassen als auch additionsvernetzende Siliconhaftklebmassen zur Verfügung.

Kondensationsvernetzende Siliconhaftklebmassen bestehen zumindest aus folgenden Komponenten:
a) einem hydroxy-funktionalisierten Organopolysiloxan, welches aus mindestens einer Diorganosiloxaneinheit besteht,
b) einem Organopolysiloxanharz mit der Formel: (R¹₃SiO_{1/2})ₓ(SiO_{4/2})_{1.0}, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) optional einem organischen Lösungsmittel
d) optional einer Peroxoverbindung
e) optional einem Stabilisator

Siliconhaftklebmassen dieser Art sind im Handel frei erhältlich.

Additionssvernetzende Siliconhaftklebmassen bestehen zumindest aus folgenden Komponenten:
a) einem Organopolysiloxan, welches aus mindestens einer Diorganosiloxaneinheit besteht und mindestens zwei Silicium-gebundene Alkenylgruppen in jedem Molekül trägt,
b) einem Organopolysiloxanharz mit der Formel: (R¹₃SiO_{1/2})ₓ(SiO_{4/2})_{1.0}, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) einem Organopolysiloxan, welches im Mittel wenigstens zwei Silicium-gebundene Wasserstoffatome in jedem Molekül trägt, in einer Menge, dass 0,01 bis 10 Mol Silicium-gebundene Wasserstoffatome pro Mol der gesamten Alkenylgruppen der Komponenten a), b) und e) vorhanden sind und welches frei von olefinischen Doppelbindungen ist,
d) optional einem organischem Lösungsmittel,
e) einem metallorganischen Katalysator der 10. Gruppe des Periodensystems der Elemente
f) optional einem Inhibitor

Siliconhaftklebmassen dieser Art sind im Handel frei erhältlich.

Als Klebrigmacher nutzen diese Klebmassen als Hauptkomponente insbesondere Organopolysiloxan- oder sogenannte MQ-Harze mit der Formel (R¹₃SiO_{1/2})ₓ(SiO_{4/2})_{1.0}. Als M-Einheit werden darin die (R¹₃SiO_{1/2})-Einheiten bezeichnet, als Q-Einheit die (SiO_{4/2})-Einheiten. Jedes R¹ stellt unabhängig voneinander eine monovalente gesättigte Kohlenwasserstoffgruppe, eine monovalente ungesättigte Kohlenwasserstoffgruppe, eine monovalente halogenierte Kohlenwasserstoffgruppe, ein Wasserstoffatom oder eine Hydroxygruppe dar. Das Verhältnis von M-Einheiten zu Q-Einheiten (M:Q) liegt im Bereich von 0,5 bis 1,2. Bei den MQ-Harzen handelt es sich vorteilhaft um solche mit einem gewichtsmittleren Molekulargewicht M_{W} von 500 g/mol ≤ M_{W} ≤ 100.000 g/mol, bevorzugt von 1.000 g/mol ≤ M_{W} ≤ 25.000 g/mol [die Angaben des mittleren Molekulargewichtes M_{W} in dieser Schrift beziehen sich auf die Bestimmung per Gelpermeationschromatographie]. MQ-Harze dieser Art sind im Handel frei erhältlich.

Es hat sich als vorteilhaft herausgestellt, wenn Klebemassen eingesetzt werden, bei denen das Anteilsverhältnis - bezogen auf Gewichtsprozent - von Polydiorganosiloxan zu MQ-Harz im Bereich von 20:80 bis 80:20, besser im Bereich von 30:70 bis zu 60:40 liegt.

Die Siliconhaftklebemassen können zudem weitere Additive enthalten. Als weitere Additive können typischerweise genutzt werden:
- Prozessstabilisatoren, wie zum Beispiel Inhibitoren für den Platinkatalysator
- Prozessbeschleuniger wie zum Beispiel Aminoorganyle im Fall von kondensationsvernetzenden Siliconhaftklebmassen
- Füllstoffe, wie zum Beispiel Kieselsäure, Glas- oder keramische Hohlkugeln, Aluminiumoxide oder Zinkoxide, und Flammschutzmittel
- Plastifizierungsmittel, wie zum Beispiel Flüssigharze, Weichmacheröle oder niedermolekulare flüssige Polymere, wie zum Beispiel niedermolekulare Siliconöle mit Molmassen < 1500 g/mol (Zahlenmittel)
- UV Stabilisatoren und Absorber wie die sog. *Hindered Amine UV Light Stabilizers (HALS)*

Der Feststoffgehalt der Siliconhaftklebemassen liegt insbesondere zwischen 50 und 100 Gew.-%. Vorzugsweise werden handelsübliche Lösungsmittel eingesetzt, insbesondere gesättigte Kohlenwasserstoffe wie Siedegrenzenbezin oder Heptan und hochsiedende Aromaten wie Toluol und Xylol.

Die Siliconhaftklebemassen können aus Lösung beschichtet werden. Für die Beschichtung aus Lösung wird die Haftklebemasse in gängigen Lösungsmitteln, wie z.B. Toluol, Benzin, etc. gelöst und dann über eine Beschichtungsdüse oder ein Rakel beschichtet. Es können aber auch alle anderen Beschichtungsverfahren eingesetzt werden, die lösungsmittelhaltige Beschichtungen zulassen. Sollte in einem ersten Beschichtungsstrich nicht der gewünschte (also ein zu geringer) Masseauftrag erzielt werden, kann der gewünschte, hohe Masseauftrag durch ein- oder mehrmaliges übereinander laminieren realisiert werden.

Die kondensationsationsvernetzenden Siliconhaftklebmassen werden zur Erzielung einer genügenden Kohäsion mit Peroxo-Initiatoren compoundiert. Besonders bevorzugt wird dafür Benzoylperoxid (BPO) in einer Menge von 0,2 bis 5 Gew.% bezogen auf den Festanteil der Siliconklebmasse eingesetzt. Um ein vernünftiges Maß zwischen Kohäsions- und Adhäsionsvermögen zu erzielen, wird insbesondere ein BPO-Gehalt von 0,5 bis 2 Gew.% gewählt. Bei der Lösungsmittelbeschichtung der Klebmasse wird zunächst für mindestens 2 Minuten eine Temperatur von 70-90°C gewählt, um die Lösungsmittel zu verdampfen. Anschließend wird für mindestens 2 Minuten eine Temperatur von 170-180°C eingestellt, um den Peroxidzerfall und so den Vernetzungsprozeß zu initiieren.

Die Erzielung einer ausreichenden Kohäsion für additionsvernetzende Siliconklebmassen erfolgt durch die Platin-katalysierte Hydrosilylierungreaktion zwischen den alkenylfunktionalisierten Organopolysiloxanen und den korrespondierenden SiHfunktionalisierten Organopolysiloxanen. Dabei wird bei der Beschichtung aus Lösung zunächst das Lösungsmittel bei einer Temperatur von 70-90°C und einer Verweilzeit von mindestens 2 Minuten entfernt. Anschließend wird die Temperatur auf 100-120°C erhöht und für bis zu 2 Minuten konstant gehalten.

Zusätzlich zu den klassischen Vernetzungsarten von Siliconhaftklebemassen mittels Peroxiden oder Übergangsmetallkatalyse können diese Klebmassen auch durch aktinische Strahlung, im speziellen Elektronenstrahlen, vernetzt werden. Dabei wird bei der Beschichtung aus Lösung zunächst das Lösungsmittel bei einer Temperatur von 70-90°C und einer Verweilzeit von mindestens 2 Minuten entfernt. Anschließend wird mit einer Elektronenstrahl-Dosis von mindestens 10 kGy vernetzt. Diese Art der Vernetzung ist besonders vorteilhaft, da sich so die Kohäsion nahezu stufenlos einstellen lässt, ohne dass die Eigenschaften Tack und Adhäsion negativ beeinflusst werden (siehe hierzu Patentanmeldung DE 10 2007 053 432.0).

Als besonders geeignet haben sich zudem auch feuchtigkeitsvernetzende siliylierte Polyurethan(PU)-Haftklebemassen herausgestellt. Siliylierte PU-Klebmassen sind Isocyanat-frei und werden über hochstabile Si-O-Si Bindungen vernetzt. Aufgrund dieses stabilen Netzwerkes zeichnen sich silylierte Polyurethanklebmassen durch chemische Resistenz gegenüber Lösungsmitteln, Wasser, Säuren und Laugen auf. Die Witterungsbeständigkeit gegenüber Luftfeuchtigkeit, Ozon und UV Licht ist dementsprechend hoch. Das widerstandsfähige Si-O-Si Netzwerk garantiert weiterhin eine hohe thermische Belastbarkeit und Scherresistenz.

Siliylierte Polyurethanklebmassen werden üblicherweise in einem 2-Stufenprozess hergestellt. Ein hochmolekulares Urethanpräpolymer wird durch eine Reaktion aus ausgewählten di- oder multifunktionellen Isocyanaten (NCO) mit ausgewählten Polyolen (OH) generiert. Dieses Präpolymer kann, abhängig vom ursprünglichen NCO/OH Verhältnis von >1 oder <1 entweder isocyanat- oder hydroxyterminiert sein. Abhängig vom gewählten Präpolymer und dessen Terminus wird dies entweder mit einem amino- oder isocyanatofunktionellen Trialkoxysilan umgesetzt. Als Lösungsmittel werden vorzugsweise Ester oder Ketone verwendet, um ein möglichst hohe Molmasse der sililylierte Polyurethanmassen zu erzielen. Da Wasser der Schlüsselfaktor für die Vernetzung dieser Klebmassen ist, sollte bevorzugt ein Lösungsmittel mit einer genügenden Wasserlöslichkeit sowohl für die Herstellung der silylierten Polyurethanklebmasse als auch für deren Vernetzung gewählt werden. Die Vernetzung verläuft in einem 2-Stufenprozess. Zunächst hydrolisieren die alkoxylierten Silane (Si-OR) zu Silanolen (Si-OH), die anschließend einer Kondensationsreaktion mit Ausbildung von stabilen Si-O-Si Bindungen unterliegen. Aus der Polyurethanchemie bekannte Katalysatoren beschleunigen diese Reaktion zusätzlich.

Zur Erzielung der erforderlichen klebtechnischen Eigenschaften werden den beschriebenen Formulierungen Harze zugesetzt. Insbesondere werden so genannte MQ-Harze mit der Formel (R¹₃SiO_{1/2})ₓ(SiO_{4/2})₁ zugesetzt. Als M-Einheit werden darin die (R¹₃SiO_{1/2})-Einheiten bezeichnet, als Q-Einheit die (SiO_{4/2})-Einheiten. Alternativ zu den MQ-Harzen können herkömmliche, in der Klebstoffindustrie bekannte Harze wie Terpen-, Terpen-Phenol-, Cumaren-, Inden- oder Kohlenwasserstoffharze zur Erhöhung des Adhäsionsvermögens eingesetzt werden.

Geeignete PU-Klebemassen basieren insbesondere auf folgenden Komponenten:
a) einem Urethanpolymer, generiert aus di- oder multifunktionellen Isocyanaten (NCO) und di- oder multifunktionellen Alkoholen (OH), wobei das NCO/OH Verhältnis entweder <1 oder >1 ist,
   welches mit mindestens einer Si(OR)₃₋ₓ Gruppe funktionalisiert ist, wobei R ein Alkyl- oder Acylrest und x die Zahl null oder eins ist,
b) einem organometallischen Katalysator aus der 4. oder 5. Hauptgruppe
c) einer katalytischen Menge Wasser
d) einem Organopolysiloxanharz mit der Formel: (R¹₃SiO_{1/2})_{y}(SiO_{4/2})₁,
   wobei R¹ eine substituierte oder unsubstituierte monovalente Kohlenwasserstoffgruppe, ein Wasserstoffatom oder eine Hydroxygruppe und y eine Zahl zwischen 0,5 und 1,2 ist
e) optional weiteren Additiven oder Füllstoffen

Zur Erzielung der erforderlichen klebtechnischen Eigenschaften werden den beschriebenen Formulierungen ebenfalls MQ-Harze mit der Formel (R¹₃SiO_{1/2})ₓ(SiO_{4/2})₁ zugesetzt. Bei den MQ-Harzen handelt es sich vorteilhaft um solche mit einem gewichtsmittleren Molekulargewicht M_{W} von 500 g/mol ≤ M_{W} ≤ 100.000 g/mol, bevorzugt von 1.000 g/mol ≤ M_{W} ≤ 25.000 g/mol, wobei sich die Angaben des mittleren Molekulargewichtes M_{W} in dieser Schrift auf die Bestimmung per Gelpermeationschromatographie beziehen (siehe experimenteller Teil).

Es hat sich als günstig herausgestellt, wenn Klebemassen eingesetzt werden, bei denen das Anteilsverhältnis - bezogen auf Gewichtsprozent - von silylierter PU-Klebmasse zu MO-Harz im Bereich von 10:90 bis 90:10, bevorzugt im Bereich von 40:60 bis zu 90:10, liegt.

Eine weiterhin vorteilhafte PU-Klebmassenformulierung basiert auf folgenden Komponenten:
a) einem Urethanpolymer, generiert aus di- oder multifunktionellen Isocyanaten (NCO) und di- oder multifunktionellen Alkoholen (OH), wobei das NCO/OH Verhältnis entweder <1 oder >1 ist,
   welches mit mindestens einer Si(OR)₃₋ₓ Gruppe funktionalisiert ist, wobei R ein Alkyl- oder Acylrest und x die Zahl null oder eins ist,
b) einem organometallischen Katalysator aus der 4. oder 5. Hauptgruppe,
c) einer katalytischen Menge Wasser,
d) einem klebrigmachenden Harz auf Basis von Terpenen, Terpen-Phenolen, Cumarenen, Indenen oder Kohlenwasserstoffen,
e) optional weiteren Additiven oder Füllstoffen.

Hierbei werden vorteilhaft die in der Klebstoffindustrie bekannte Harze wie Terpen-, Terpen-Phenol-, Cumaren-, Inden- oder Kohlenwasserstoffharze zur Erhöhung des Adhäsionsvermögens eingesetzt. Besonders vorteilhaft ist die Verwendung von Harzen, die einen Erweichungsbereich von 80 bis 150°C aufweisen. Beispielhaft seien an dieser Stelle genannt: KE-311 Arakawa Technical Industries und Kristalex F85, Kristalex F 100 und Kristalex 115 von Eastmen Chemical Company.

### Weitere Abmischkomponenten

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Füllstoffe, wie zum Beispiel Siliziumdioxid, Glas (gemahlen oder in Form von Kugeln), Aluminiumoxide oder Zinkoxide, wobei die Füllstoffe so klein gemahlen sind, dass Sie optisch nicht sichtbar sind
- Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel)

Für die Anwendung von Klebebändern kommen diese herausragenden Materialeigenschaften vorteilhaft zum Tragen, wenn eine silylierte PU-Klebemasse mit Mikroballons gefüllt und somit schäumbar wird. Weiterhin ist es insbesondere vorteilhaft, wenn die durch Mikroballons schäumbare silylierte PU-Klebemasse in einem doppelseitigen Klebeband verwendet wird, dessen Träger eine Barrierefolie ist. Die zweite Seite der Barrierefolie wird hierzu ebenfalls mit einer silylierte PU-Klebemasse beschichtet. Haftklebmassen auf Basis von silylierten PUs sind im Handel frei erhältlich; der Stand der Technik ist unter anderem in folgenden Schriften dokumentiert: US 2007129527 A1; US 20080058492 A1; WO 2006118766 A1.

Des Weiteren hat sich als Klebemasse eine solche auf Acrylathotmelt-Basis als geeignet erwiesen, die einen K-Wert von mindestens 20 aufweist, insbesondere größer 30, erhältlich durch Aufkonzentrieren einer Lösung einer solchen Masse zu einem als Hotmelt verarbeitbaren System. Das Aufkonzentrieren kann in entsprechend ausgerüsteten Kesseln oder Extrudern stattfinden, insbesondere beim damit einhergehenden Entgasen ist ein Entgasungsextruder bevorzugt. Eine derartige Klebemasse ist in der DE 43 13 008 A1 beschrieben. Diesen, auf diesem Wege hergestellten Acrylatmassen, wird in einem Zwischenschritt das Lösungsmittel vollständig entzogen. Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle in dem in Bezug genommenen Patent genannten Monomere/Rezepturen übernommen werden. Ein weiterer Vorteil der beschriebenen Massen ist darin zu sehen, dass diese einen hohen K-Wert und damit ein hohes Molekulargewicht aufweisen. Dem Fachmann ist bekannt, dass sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben. Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt. Der Restlösungsmittel-Gehalt sollte unter 1 Gew.-% betragen.

Für besonders empfindliche Solarzellen, beispielhaft organische, CIGS- oder CIS-Solarzellen, die unter Einwirkung von Wasserdampf zu verstärkter Degradation bzw. Schichtablösen neigen, eignet sich insbesondere ein Klebebandaufbau mit einer Barrierefolie zwischen der mit Mikroballon versetzten Klebemasse und einer zusätzlichen Klebemasseschicht ohne Mikroballons.

Die eingesetzte Barrierefolie zeichnet sich durch eine geringe Wasserdampfpermeation aus, um die empfindliche Laminatkante schützen zu können. Unter Permeation versteht man den Vorgang, bei dem ein Stoff (Permeat) einen Festkörper durchdringt oder durchwandert. Die Triebkraft ist ein Konzentrationsgradient. Permeabilität wird durch eine Permeationsmessung geprüft. Die Barrierefolie sollte insbesondere eine Wasserdampfdurchlässigkeit kleiner 200g/m²d bei 37,8 °C, 90% RH aufweisen. Besonders bevorzugt ist eine Barrierefolie mit einer Wasserdampfdurchlässigkeit von weniger als 5 vorzugsweise weniger als 0,1 und besonders bevorzugt weniger als 0,01 g/m².d gemessen bei 37,8 °C und 90 % relativer Feuchte haben (d = day = 24 h).

### Permeationsmessung mit Spülgasmethode

In einer entsprechenden Messzelle für Rohre, Folien und Membranen können diese sowohl mit beliebigen Gasen als auch mit Flüssigkeiten aller Art auf ihre Durchlässigkeit überprüft werden. Die Messtechniken für Gase beinhalten alle ein zentrales Modul, das von der zu testenden Membran geteilt wird: Auf der "Feed-Seite" wird die Messzelle mit dem Prüfgas überströmt, das übrige Retentat wird abgeleitet. Die auf der anderen Seite angekommene Menge des Gases (Permeat) wird vom Spülgas zu einem Detektor geführt, wo die Konzentration gemessen wird. Ober- und Unterteil der Zelle umschließen die zentrierte Membran. Ein O-Ring, der auf der Probe aufliegt, dichtet die Grenzfläche ab. Diese Art von Zellen ist meist aus Metall wie z. B. Edelstahl gefertigt.

Als Barrierefolie wird bevorzugt eine Polyesterfolie eingesetzt. Daneben zeigen auch Folien aus zum Beispiel PUR, PP, PE, PVC, PVDC, PEN, PAN, EVOH und PA, PA mit Nanokomposits hervorragende Eigenschaften. Bei PA mit Nanokomposits handelt es sich um ein mit Schichtsilicat gefülltes PA. Diese Teilchen haben eine plättchenförmige Struktur ähnlich wie Talkum. Im Gegensatz zu Talkum ist die Teilchengröße erheblich kleiner (Nanometerbereich). Diese Teilchen werden bei der Extrusion ausgerichtet und bilden eine Schichtstruktur. Die Teilchen selbst sind wie Glas völlig undurchlässig für Gase. Die Gase werden beim Durchdringen der Folie behindert, wodurch die verbesserte Barrierewirkung entsteht. Die Schichtstruktur bildet eine Art Labyrinth, welches die Gase und Aromen passieren müssen. Aufgrund der geringen Teilchengröße sind die optischen Eigenschaften der Folie nicht beeinträchtigt. Das Klebeband sollte eine Wasserdampfdurchlässigkeit kleiner 12 g/m²d bei 37,8 °C, 90% RH haben (d ... day: 24 h).

Bevorzugt werden Barrierefolien mit 0,5 µm bis 160 µm, bevorzugt mit 2 µm bis 120 µm, Dicke verwendet um eine hinreichende Permeationswirkung zu erzielen aber ohne die Steifigkeit des Klebebandes allzu sehr zu vergrößern.

In einer weiteren vorteilhaften Ausgestaltung ist die Barrierefolie als Laminat aus Kunststofffolien ausgebildet, und zwar bevorzugt aus einer Polyesterfolie sowie aus einer Polyolefinfolie, wobei weiter bevorzugt die Polyolefinfolie mit einer metallischen Schicht versehen ist.

Geeignet sind Folien aus einem Folienteil, der von zumindest einer Kunststofffolie aus insbesondere Polyester gebildet wird, sowie einem auf dem Folienteil aufgebrachten metallischen Teil, der aus einer metallischen Schicht, insbesondere aus Aluminium, gebildet wird. Die untere Klebeschicht ist bevorzugt auf der freiliegenden Seite der metallischen Schicht aufgebracht.

Die metallische Schicht dient dabei als Barriereschicht, hält also korrosionsfördernde Substanzen wie Wasser, Wasserdampf, Sauerstoff, Schwefeldioxid und Kohlendioxid vom zu schützenden Gut, insbesondere also den flächenförmigen Funktionsschichten, fern.

In einer ersten vorteilhaften Ausführungsform der Erfindung weist die metallische Schicht eine Dicke von 10 nm bis 50 µm auf, insbesondere 20 nm bis 25 µm.

Das Aufbringen der metallischen Schicht auf den Folienteil geschieht beispielsweise durch Bedampfen, also indem ein Überzug auf der Kunststofffolie durch thermisches Verdampfen im Vakuum (rein thermisch, elektrisch mit Elektronenstrahlen, durch Kathodenzerstäubung oder Drahtexplosion, gegebenenfalls mit Hilfe von Laser-Strahlen) erzeugt wird.

Die Barrierefolie wird bevorzugt mit Bindemitteln (Laminierharzen) wie Epoxid-, Melaminharzen, Thermoplasten usw. verklebt.

Besonders bevorzugt wird als Barrierefolie eine Polyesterfolie, insbesondere mit einer Dicke im Bereich 4 µm bis 40 µm, oder eine Polyolefinfolie, insbesondere mit einer Dicke 20 µm bis 120 µm, eingesetzt. Auch Kombinationen dieser Folien sind verwendbar.

Weiterhin können auch drei- oder mehrschichtige Laminate zum Einsatz kommen. Des Weiteren können auch symmetrische Laminataufbauten um einen Kern aus einer Metallschicht in besonderen Anwendungsfeldern von Vorteil sein.

Weiter ist vorteilhaft, wenn zwischen metallischer Schicht und Klebemasse ein zweiter Folienteil vorhanden ist. Die beiden Folienteile bestehen in diesem Falle vorzugsweise aus identischen Kunststofffolien, weiter vorzugsweise ist der zweite Folienteil ebenfalls ein Laminat aus einer Polyesterfolie sowie aus einer Polyolefinfolie, wobei wieder insbesondere die Polyolefinfolie an der metallischen Schicht anliegt.

Weitere Einzelheiten, Ziele, Merkmale und Vorteile der Erfindung werden nachfolgend anhand eines Ausführungsbeispiels näher erläutert. In der Zeichnung zeigt
- Fig. 1: eine schematische Darstellung eines herkömmlichen Schaumstoffklebebandes in einem PV-Modul,
- Fig. 2: eine schematische Darstellung eines schäumbaren Klebebandes vorm Aufschäumen in einem PV-Modul,
- Fig. 3: das Klebeband aus Fig. 2 nach dem Aufschäumen.

### Vergleichsbeispiel:

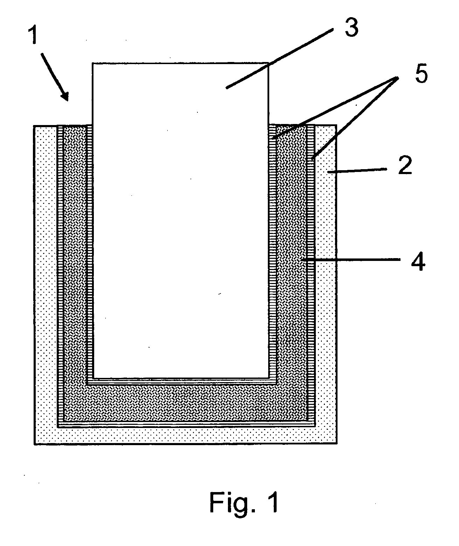

Fig. 1 zeigt ein doppelseitiges Schaumstoffklebeband 1, das im Rahmen 2 eines PV-Moduls angeordnet ist und das PV-Laminat 3 fixiert. Der Rahmen 2 ist aus 2 mm dickem Aluminium hergestellt und weist ein U- Profil mit einer Nut von 6 mm und einer Tiefe von 10 mm auf. Das Laminat 3 ist an der Kante und an der Ober- und Unterseite mit einem doppelseitigen Schaumstoffklebeband 1, mit einer Dicke von 1100 µm (tesa 4957) versehen. Das Schaumstoffklebeband 1 weist hier eine Schaumstoffschicht 4 sowie zwei Klebeschichten 5 auf.
Das Laminat 3, bestehend aus 3,2 mm Glas, 2 Lagen 460 µm EVA-Folien (Etimex Vistasolar FC 486.10) und einer Rückseitenfolie aus einer Vorder- und einer Rückseite aus Tedlar® und einer Polyesterfolie als Kern mit einer Dicke von 170 µm (Isovolta, Icosolar WW 249L), wurde mit einem Laminator der Fa. Meyer wie folgt hergestellt:
1) 2,5 Minuten bei 40°C, evakuieren auf 20 mbar
2) Bodentemperatur wird innerhalb von 3,5 Minuten von 40°C auf 133°C erhöht, gleichzeitig die obere Laminatoberfläche auf das Modul gedrückt bis 780 mbar erreicht sind
3) beim erreichen von 780 mbar wird 13 Minuten bei 133°C und 780 mbar vernetzt
4) das Laminat wird für ca. 7 Minuten auf 40°C abgekühlt.

Das Laminat 3 wies nach dem Laminieren eine Gesamtdicke von 5 mm auf, nach der Ausrüstung mit dem doppelseitigem Klebeband 1 wies es eine Gesamtdicke von 7,2 mm auf.

Das mit Klebeband 1 ausgerüstete Laminat 3 wurde anschließend mit einer Geschwindigkeit von 50 mm/min. in den Rahmen 2 gepresst. Die hierfür notwendige Kraft betrug etwa 20 N/cm.

Die Verklebungsfestigkeit wurde nach einer Lagerzeit von 24h bei 23°C und 50 % rF ermittelt, durch Einspannen der oberen Laminatkante und der gerahmten, unteren Laminatkante. Die obere Laminatkante wurde mit einer Geschwindigkeit von 300 mm/min. nach oben gezogen. Dabei wurde die Kraft ermittelt, welche benötigt wird, um das Laminat 3 aus dem Rahmen 2 zu ziehen. Die so ermittelte Zugkraft betrug etwa 42 N/cm.

### 1. Beispiel

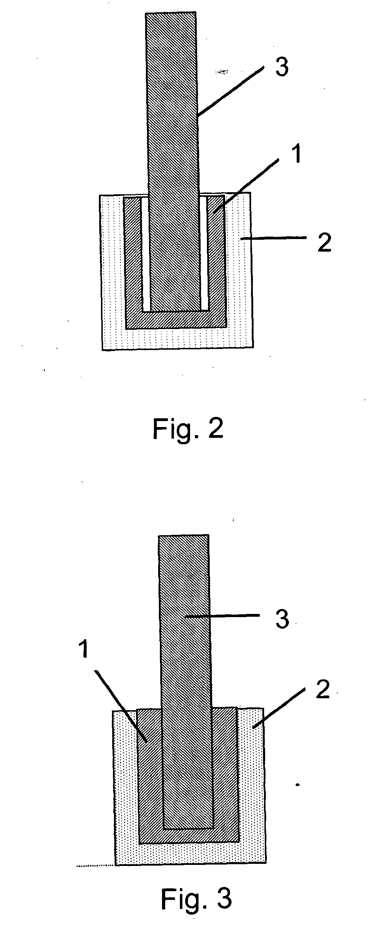

Fig. 2 zeigt die Anordnung eines schäumbaren Klebebandes 1, welches als Transferklebeband ausgebildet ist, in einem PV-Rahmen 2.

Zur Herstellung des Klebebandes 1 wurde eine lösungsmittelhaltige Acrylatklebemasse, AC Ester 1743 von National Starch, in einem handelüblichen Flügelrührwerk der Firma Ika mit 5 Gew % Mikroballons der Firma Akzo Nobel vom Typ 51 DU 40 abgemischt und auf einem Trennpapier, welches beidseitig mit einem Release ausgerüstet ist mit einem Rakel gestrichen. Nach der Trocknung bei 23°C für 240 min. und 15 min. bei 70°C erhält man auf dem Trennpapier eine trockene, ungeschäumte PSA Schicht, welche mit unexpandierten Mikroballons homogen abgemischt ist, mit einer Dicke von 400 µm.

Nach der Konfektionierung zu 2,5 cm Breite, wurde das Klebeband 1 zu einem U-gefaltet, so dass die Masseschicht nach außen liegt (Fig. 2). Dieses U-förmige Klebeband wurde in den Rahmen 2 gepresst, sodass eine Nut von 5,2 mm verblieb.

Der Rahmen 2 wurde gemeinsam mit dem Klebeband 1 auf die richtige Länge gesägt, für die Ecken mit einer Gehrung von etwa 45°.

Das Laminat 3 wurde ohne Druck in den mit dem Klebeband 1 ausgerüsteten Rahmen 2 geschoben (Fig. 2). Die einzelnen Rahmenelemente wurden an den Ecken miteinander verschraubt.

Durch eine Kontakttemperierung des Rahmens für 30 s mit 200°C wurden die im Klebeband befindlichen Mikroballons zum Schäumen gebracht. Das Klebeband 1 füllte anschließend alle noch verbliebenen Lücken zwischen Rahmen 2 und Laminat 3 vollständig aus (Fig. 3).

Die Verklebungsfestigkeit wurde nach einer Lagerzeit von 24h bei 23°C und 50 % rF ermittelt, durch Einspannen der oberen Laminatkante und der gerahmten, unteren Laminatkante. Die obere Laminatkante wurde mit einer Geschwindigkeit von 300 mm/min. nach oben gezogen. Dabei wurde die Kraft ermittelt, welche benötigt wird, um das Laminat 3 aus dem Rahmen 2 zu ziehen. Die so ermittelte Zugkraft betrug etwa 84 N/cm.

Die Beispiele 2 bis 12 zeigen weitere Klebebänder, die in gleicher Weise wie das zuvor beschriebene Klebeband mit Laminat und Rahmen verbunden und aufgeschäumt wurden. Die weiteren Beispiele weisen jedoch unterschiedliche Klebmassen auf.

Für alle Beispiele wurde die Zugkraft, die benötigt wird, um das Laminat aus dem Rahmen zu ziehen, jeweils wie folgt ermittelt: Nach Verklebung von Laminat und Rahmen, einschließlich Aufschäumen des Klebebandes, wurde die Verklebungsfestigkeit nach einer Lagerzeit von 24h bei 23°C und 50 % rF ermittelt, durch Einspannen der oberen Laminatkante und der gerahmten, unteren Laminatkante. Die obere Laminatkante wurde mit einer Geschwindigkeit von 300 mm/min. nach oben gezogen. Dabei wurde die Kraft ermittelt, welche benötigt wird, um das Laminat 3 aus dem Rahmen 2 zu ziehen.

### 2. Beispiel

Zur Herstellung eines Siliconklebebandes 1 wurde eine lösungsmittelhaltige Siliconhaftklebemasse, PSA 45559 von Wacker, in einem handelsüblichen Flügelrührwerk der Firma Ika mit 5 Gew % Mikroballons der Firma Akzo Nobel vom Typ 51 DU 40 abgemischt und auf einem Trennfilm, welcher beidseitig mit einem Fluorsiliconrelease ausgerüstet ist, mit einem Rakel ausgestrichen. Nach der Trocknung bei 23°C für 20 min. und 15 min. bei 120°C erhält man auf dem Trennfilm eine trockene, ungeschäumte Siliconhaftklebmassenschicht, welche mit unexpandierten Mikroballons homogen abgemischt ist, mit einer Dicke von 200 µm. Um für das Siliconklebeband 1 eine Schichtdicke von 400 µm zu erhalten, werden zwei der 200 µm dicken Silicontransferklebebänder aufeinander laminiert.

Eine Kontakttemperierung des Rahmens wurde für 30 s mit 200°C zum Aufschäumen der Mikroballons durchgeführt.

Die erforderliche Zugkraft zum Herausziehen des Laminats aus dem Rahmen betrug etwa 46 N/cm.

### 3. Beispiel

Zur Herstellung des Siliconklebebandes 1 wurde eine lösungsmittelhaltige Siliconhaftklebemasse, PSA 45559 von Wacker, in einem handelsüblichen Flügelrührwerk der Firma Ika mit 5 Gew % Mikroballons der Firma Akzo Nobel vom Typ 51 DU 40 abgemischt und auf einem Trennfilm, welcher beidseitig mit einem Fluorsiliconrelease ausgerüstet ist, mit einem Rakel ausgestrichen. Nach der Trocknung bei 23°C für 20 min. und 15 min. bei 120°C erhält man auf dem Trennfilm eine trockene, ungeschäumte Siliconhaftklebmassenschicht, welche mit unexpandierten Mikroballons homogen abgemischt ist, mit einer Dicke von 200 µm. Um für das Siliconklebeband 1 eine Schichtdicke von 400 µm zu erhalten, werden zwei der 200 µm dicken Silicontransferklebebänder aufeinander laminiert. Das Siliconklebeband 1 wird mit Elektronenstrahlen vernetzt: 160 kV und 10 kGy.

Eine Kontakttemperierung des Rahmens wurde für 30 s mit 200°C zum Aufschäumen der Mikroballons durchgeführt.

Die erforderliche Zugkraft zum Herausziehen des Laminats aus dem Rahmen betrug etwa 49 N/cm.

### 4. Beispiel

Zur Herstellung des Siliconklebebandes 1 wurde eine lösungsmittelhaltige Siliconhaftklebemasse, PSA 45559 von Wacker, in einem handelsüblichen Flügelrührwerk der Firma Ika mit 5 Gew % Mikroballons der Firma Akzo Nobel vom Typ 950 DU 80 und 2 Gew.% Perkadox L-50S-PS der Firma Akzo Nobel abgemischt und auf einem Trennfilm, welcher beidseitig mit einem Fluorsiliconrelease ausgerüstet ist, mit einem Rakel ausgestrichen. Nach der Trocknung bei 23°C für 20 min., 5 min. bei 90°C und 3 min. bei 175°C erhält man auf dem Trennfilm eine trockene, ungeschäumte Siliconhaftklebmassenschicht, welche mit unexpandierten Mikroballons homogen abgemischt ist, mit einer Dicke von 200 µm. Um für das Siliconklebeband 1 eine Schichtdicke von 400 µm zu erhalten, werden zwei der 200 µm dicken Silicontransferklebebänder aufeinander laminiert.

Eine Kontakttemperierung des Rahmens wurde für 30 s mit 210°C zum Aufschäumen der Mikroballons durchgeführt.

Die erforderliche Zugkraft zum Herausziehen des Laminats aus dem Rahmen betrug etwa 47 N/cm.

### 5. Beispiel

Zur Herstellung des Siliconklebebandes 1 wurde eine lösungsmittelhaltige Siliconhaftklebemasse, PSA 45559 von Wacker, in einem handelsüblichen Flügelrührwerk der Firma Ika mit 5 Gew % Mikroballons der Firma Akzo Nobel vom Typ 950 DU 80 und 2 Gew.% Perkadox L-50S-PS der Firma Akzo Nobel abgemischt und auf einem Trennfilm, welcher beidseitig mit einem Fluorsiliconrelease ausgerüstet ist, mit einem Rakel ausgestrichen. Nach der Trocknung bei 23°C für 20 min. und 15 min. bei 120°C erhält man auf dem Trennfilm eine trockene, ungeschäumte Siliconhaftklebmassenschicht, welche mit unexpandierten Mikroballons homogen abgemischt ist, mit einer Dicke von 200 µm. Um für das Siliconklebeband 1 eine Schichtdicke von 400 µm zu erhalten, werden zwei der 200 µm dicken Silicontransferklebebänder aufeinander laminiert.

Eine Kontakttemperierung des Rahmens wurde für 3 min. mit 210°C zum Aufschäumen der Mikroballons durchgeführt.

Die erforderliche Zugkraft zum Herausziehen des Laminats aus dem Rahmen betrug etwa 49 N/cm.

### 6. Beispiel

Zur Herstellung des Siliconklebebandes 1 wurde eine lösungsmittelhaltige Siliconhaftklebemasse, DC 7657 von Dow Corning, in einem handelsüblichen Flügelrührwerk der Firma Ika mit a) 5 Gew % Mikroballons der Firma Akzo Nobel vom Typ 51 DU 40 und b) 1% SylOff 4000 der Firma Dow Corning abgemischt und auf einem Trennfilm, welcher beidseitig mit einem Fluorsiliconrelease ausgerüstet ist, mit einem Rakel ausgestrichen. Nach der Trocknung bei 23°C für 20 min. und 15 min. bei 120°C erhält man auf dem Trennfilm eine trockene, ungeschäumte Siliconhaftklebmassenschicht, welche mit unexpandierten Mikroballons homogen abgemischt ist, mit einer Dicke von 200 µm. Um für das Siliconklebeband 1 eine Schichtdicke von 400 µm zu erhalten, werden zwei der 200 µm dicken Silicontransferklebebänder aufeinander laminiert.

Eine Kontakttemperierung des Rahmens wurde für 30 s mit 200°C zum Aufschäumen der Mikroballons durchgeführt.

Die erforderliche Zugkraft zum Herausziehen des Laminats aus dem Rahmen betrug etwa 39 N/cm.

### 7. Beispiel

Zur Herstellung eines silylierten PU-Klebebandes 1 wurde eine lösungsmittelhaltige silylierte PU-Haftklebemasse, SPUR⁺ 3.0 PSA von Momentive Performance Chemicals, in einem handelsüblichen Flügelrührwerk der Firma Ika mit 5 Gew % Mikroballons der Firma Akzo Nobel vom Typ 51 DU 40, 0.7 Gew.% Wasser und 0.02 Gew% Formrez UL-28 Firma Momentive Performance Chemicals abgemischt und auf einem Trennfilm, welcher beidseitig mit einem Siliconrelease ausgerüstet ist, mit einem Rakel ausgestrichen. Nach der Trocknung bei 23°C für 20 min. und 5 min. bei 80°C erhält man auf dem Trennfilm eine trockene, ungeschäumte silylierte PU-Haftklebemassenschicht, welche mit unexpandierten Mikroballons homogen abgemischt ist, mit einer Dicke von 200 µm. Um für das silylierte PU-Klebeband 1 eine Schichtdicke von 400 µm zu erhalten, werden zwei der 200 µm dicken silylierten PU-Transferklebebänder aufeinander laminiert.

Eine Kontakttemperierung des Rahmens wurde für 30 s mit 200°C zum Aufschäumen der Mikroballons durchgeführt.

Die erforderliche Zugkraft zum Herausziehen des Laminats aus dem Rahmen betrug etwa 33 N/cm.

### 8. Beispiel

Zur Herstellung des silylierten PU-Klebebandes 1 wurde eine lösungsmittelhaltige silylierte PU-Haftklebemasse, SPUR⁺ 3.0 PSA von Momentive Performance Chemicals, in einem handelsüblichen Flügelrührwerk der Firma Ika mit 5 Gew % Mikroballons der Firma Akzo Nobel vom Typ 950 DU 80, 40 Gew.% SR 1000 der Firma Momentive Performance Chemicals, 0.7 Gew.% Wasser, 0.02 Gew% Formrez UL-28 und 2 Gew.% Perkadox L-50S-PS der Firma Akzo Nobel abgemischt und auf einem Trennfilm, welcher beidseitig mit einem Siliconrelease ausgerüstet ist, mit einem Rakel ausgestrichen. Nach der Trocknung bei 23°C für 20 min., 5 min. bei 80°C und 3 min. bei 175°C erhält man auf dem Trennfilm eine trockene, ungeschäumte silylierte PU-Haftklebemassenschicht, welche mit unexpandierten Mikroballons homogen abgemischt ist, mit einer Dicke von 200 µm. Um für das silylierte PU-Klebeband 1 eine Schichtdicke von 400 µm zu erhalten, werden zwei der 200 µm dicken silylierten PU-Transferklebebänder aufeinander laminiert.

Eine Kontakttemperierung des Rahmens wurde für 30 s mit 210°C zum Aufschäumen der Mikroballons durchgeführt.

Die erforderliche Zugkraft zum Herausziehen des Laminats aus dem Rahmen betrug etwa 44 N/cm.

### 9. Beispiel

Zur Herstellung des silylierten PU-Klebebandes 1 wurde eine lösungsmittelhaltige silylierte PU-Haftklebemasse, SPUR⁺ 3.0 PSA von Momentive Performance Chemicals, in einem handelsüblichen Flügelrührwerk der Firma Ika mit 5 Gew % Mikroballons der Firma Akzo Nobel vom Typ 950 DU 80, 40 Gew.% SR 1000 der Firma Momentive Performance Chemicals, 0.7 Gew.% Wasser, 0.02 Gew% Formrez UL-28 und 2 Gew.% Perkadox L-50S-PS der Firma Akzo Nobel abgemischt und auf einem Trennfilm, welcher beidseitig mit einem Siliconrelease ausgerüstet ist, mit einem Rakel ausgestrichen. Nach der Trocknung bei 23°C für 20 min. und 5 min. bei 80°C erhält man auf dem Trennfilm eine trockene, ungeschäumte silylierte PU-Haftklebemassenschicht, welche mit unexpandierten Mikroballons homogen abgemischt ist, mit einer Dicke von 200 µm. Um für das silylierte PU-Klebeband 1 eine Schichtdicke von 400 µm zu erhalten, werden zwei der 200 µm dicken silylierten PU-Transferklebebänder aufeinander laminiert.

Eine Kontakttemperierung des Rahmens wurde für 3 min. mit 210°C zum Aufschäumen der Mikroballons durchgeführt. Dabei wurden auch das MQ Harz SR 1000 und damit auch die silylierte PU-Klebmasse vernetzt.

Die erforderliche Zugkraft zum Herausziehen des Laminats aus dem Rahmen betrug etwa 41 N/cm.

### 10. Beispiel

Zur Herstellung des silylierten PU-Klebebandes 1 wurde eine lösungsmittelhaltige silylierte PU-Haftklebemasse, SPUR⁺ 3.0 PSA von Momentive Performance Chemicals, in einem handelsüblichen Flügelrührwerk der Firma Ika mit 5 Gew % Mikroballons der Firma Akzo Nobel vom Typ 51 DU 40, 40 Gew.% Picco A 100 der Firma Eastman Chemical Company, 0.7 Gew.% Wasser, 0.02 Gew% Formrez UL-28 und abgemischt und auf einem Trennfilm, welcher beidseitig mit einem Siliconrelease ausgerüstet ist, mit einem Rakel ausgestrichen. Nach der Trocknung bei 23°C für 20 min. und 5 min. bei 80°C erhält man auf dem Trennfilm eine trockene, ungeschäumte silylierte PU-Haftklebemassenschicht, welche mit unexpandierten Mikroballons homogen abgemischt ist, mit einer Dicke von 200 µm. Um für das silylierte PU-Klebeband 1 eine Schichtdicke von 400 µm zu erhalten, werden zwei der 200 µm dicken silylierten PU-Transferklebebänder aufeinander laminiert.

Eine Kontakttemperierung des Rahmens wurde für 30 s mit 210°C zum Aufschäumen der Mikroballons durchgeführt.

Die erforderliche Zugkraft zum Herausziehen des Laminats aus dem Rahmen betrug etwa 37 N/cm.

### 11. Beispiel

Zur Herstellung des silylierten PU-Klebebandes 1 wurde eine lösungsmittelhaltige silylierte PU-Haftklebemasse, SPUR⁺ 3.0 PSA von Momentive Performance Chemicals, in einem handelsüblichen Flügelrührwerk der Firma Ika mit 5 Gew % Mikroballons der Firma Akzo Nobel vom Typ 51 DU 40, 40 Gew.% DT 110 der Firma Derives Résiniques et Terpéniques, 0.7 Gew.% Wasser, 0.02 Gew% Formrez UL-28 und abgemischt und auf einem Trennfilm, welcher beidseitig mit einem Siliconrelease ausgerüstet ist, mit einem Rakel ausgestrichen. Nach der Trocknung bei 23°C für 20 min. und 5 min. bei 80°C erhält man auf dem Trennfilm eine trockene, ungeschäumte silylierte PU-Haftklebemassenschicht, welche mit unexpandierten Mikroballons homogen abgemischt ist, mit einer Dicke von 200 µm. Um für das silylierte PU-Klebeband 1 eine Schichtdicke von 400 µm zu erhalten, werden zwei der 200 µm dicken silylierten PU-Transferklebebänder aufeinander laminiert.

Eine Kontakttemperierung des Rahmens wurde für 30 s mit 210°C zum Aufschäumen der Mikroballons durchgeführt.

Die erforderliche Zugkraft zum Herausziehen des Laminats aus dem Rahmen betrug etwa 40 N/cm.

### 12. Beispiel

Zur Herstellung des silylierten PU-Klebebandes 1 wurde eine lösungsmittelhaltige silylierte PU-Haftklebemasse, SPUR⁺ 3.0 PSA von Momentive Performance Chemicals, in einem handelsüblichen Flügelrührwerk der Firma Ika mit 5 Gew % Mikroballons der Firma Akzo Nobel vom Typ 51 DU 40, 40 Gew.% DT 135 der Firma Derives Résiniques et Terpéniques, 0.7 Gew.% Wasser, 0.02 Gew% Formrez UL-28 und abgemischt und auf einem Trennfilm, welcher beidseitig mit einem Siliconrelease ausgerüstet ist, mit einem Rakel ausgestrichen. Nach der Trocknung bei 23°C für 20 min. und 5 min. bei 80°C erhält man auf dem Trennfilm eine trockene, ungeschäumte silylierte PU-Haftklebemassenschicht, welche mit unexpandierten Mikroballons homogen abgemischt ist, mit einer Dicke von 200 µm. Um für das silylierte PU-Klebeband 1 eine Schichtdicke von 400 µm zu erhalten, werden zwei der 200 µm dicken silylierten PU-Transferklebebänder aufeinander laminiert.

Eine Kontakttemperierung des Rahmens wurde für 30 s mit 210°C zum Aufschäumen der Mikroballons durchgeführt.

Die erforderliche Zugkraft zum Herausziehen des Laminats aus dem Rahmen betrug etwa 40 N/cm.

## Patentansprüche

1. Verfahren zur Verklebung eines Photovoltaik-Moduls,
bei dem ein Klebeband auf den Randbereich eines Photovoltaik-Laminats aufgebracht oder in den Rahmen eines Photovoltaik-Moduls eingebracht wird, wobei das Klebeband mindestens eine Klebeschicht aufweist, die als ein Schäumungsmittel enthaltende Polymerschicht ausgebildet ist, und
bei dem anschließend das Laminat in den Rahmen eingefügt wird
**dadurch gekennzeichnet,**
**dass** das Klebeband nach Einführen des Laminats in den Rahmen aufgeschäumt wird.

2. Verfahren nach Anspruch 1, **dadurch gekennzeichnet,**
**dass** die das Schäumungsmittel enthaltende Polymerschicht durch Wärmezufuhr, vorzugsweise von mindestens 100°C, weiter vorzugsweise von mindestens 150°C, aufgeschäumt wird.

3. Verfahren nach Anspruch 1 oder 2, **dadurch gekennzeichnet,**
**dass** die das Schäumungsmittel enthaltende Polymerschicht durch die Aufschäumung eine Volumenvergrößerung um mindestens 30%, bevorzugt um mindestens 50%, erfährt.

4. Verfahren nach einem der Ansprüche 1 bis 3, **dadurch gekennzeichnet,**
**dass** das Klebeband während der Herstellung des Rahmens, insbesondere beim Strangpressen, in diesen eingebracht wird.

5. Verfahren nach einem der Ansprüche 1 bis 4, **dadurch gekennzeichnet,**
**dass** das Klebeband mit dem Rahmen gemeinsam auf die gewünschte Länge abgelängt wird.

6. Verfahren nach zumindest einem der vorherigen Ansprüche,
**dadurch gekennzeichnet, dass**
mindestens eine Klebeschicht auf Basis von Poly(diorgano)siloxanen ausgebildet ist.

7. Verfahren nach zumindest einem der Ansprüche 1 - 5,
**dadurch gekennzeichnet, dass**
mindestens eine Klebeschicht als Klebemasse eine feuchtigkeitsyernetzende silylierte Polyurethanhaftklebemasse aufweist.

8. Verfahren nach zumindest einem der vorherigen Ansprüche,
**dadurch gekennzeichnet, dass**
das Klebeband zusätzlich eine Barriereschicht und/oder einen Träger aufweist, vorzugsweise, dass die Barriereschicht den Träger bildet.

9. Verfahren nach Anspruch 8,
**dadurch gekennzeichnet, dass**
mindestens eine zweite Klebeschicht vorgesehen ist und dass die Kleberschichten eine obere und eine untere Klebeschicht bilden.

10. Verfahren nach zumindest einem der vorherigen Ansprüche,
**dadurch gekennzeichnet, dass**
die das Schäumungsmittel enthaltende Polymerschicht nach dem Aufschäumen eine Schichtdicke im Bereich von etwa 100 µm bis etwa 3000 µm aufweist.

## Claims

1. Method for adhesively bonding a photovoltaic module,
in which an adhesive tape is applied to the edge region of a photovoltaic laminate or is incorporated into the frame of a photovoltaic module,
where the adhesive tape has at least one adhesive layer which is formed as a polymer layer comprising a foaming agent, and
in which subsequently the laminate is inserted into the frame,
**characterized**
**in that** the adhesive tape, following introduction of the laminate into the frame, is foamed.

2. Method according to Claim 1, **characterized**
**in that** the polymer layer comprising the foaming agent is foamed by supply of heat, preferably at not less than 100°C, more preferably at not less than 150°C.

3. Method according to Claim 1 or 2, **characterized**
**in that** the polymer layer comprising the foaming agent, as a result of foaming, undergoes a volume enlargement by at least 30%, preferably by at least 50%.

4. Method according to any of Claims 1 to 3,
**characterized**
**in that** the adhesive tape is incorporated into the frame during production of the frame, more particularly during extrusion.

5. Method according to any of Claims 1 to 4,
**characterized**
**in that** the adhesive tape is separated off together with the frame to the desired length.

6. Method according to at least one of the preceding claims,
**characterized in that**
at least one adhesive layer is formed on the basis of poly(diorgano)siloxanes.

7. Method according to at least one of Claims 1-5,
**characterized in that**
at least one adhesive layer has as its adhesive a pressure-sensitive, moisture-crosslinking, silylated polyurethane adhesive.

8. Method according to at least one of the preceding claims,
**characterized in that**
the adhesive tape additionally has a barrier layer and/or a carrier,
preferably **in that** the barrier layer forms the carrier.

9. Method according to Claim 8,
**characterized in that**
at least one second adhesive layer is provided and **in that** the adhesive layers form a top adhesive layer and a bottom adhesive layer.

10. Method according to at least one of the preceding claims,
**characterized in that**
the polymer layer comprising the foaming agent, after foaming, has a layer thickness in the range from about 100 µm to about 3000 µm.

## Revendications

1. Procédé pour le collage d'un module photovoltaïque, dans lequel une bande adhésive est appliquée sur le bord d'un stratifié photovoltaïque ou dans le cadre d'un module photovoltaïque, la bande adhésive présentant au moins une couche adhésive qui est réalisée sous forme d'une couche polymère contenant un agent de moussage et dans lequel le laminé est ensuite inséré dans le cadre, **caractérisé en ce que** la bande adhésive est moussée après l'introduction du stratifié dans le cadre.

2. Procédé selon la revendication 1, **caractérisé en ce que** la couche polymère contenant l'agent de moussage est moussée par apport de chaleur, de préférence à au moins 100°C, plus préférablement à au moins 150°C.

3. Procédé selon la revendication 1 ou 2, **caractérisé en ce que** la couche polymère contenant l'agent de moussage subit, par le moussage, une augmentation de volume d'au moins 30%, de préférence d'au moins 50%.

4. Procédé selon l'une quelconque des revendications 1 à 3, **caractérisé en ce que** la bande adhésive est introduite pendant la fabrication du cadre, en particulier lors de l'extrusion, dans celui-ci.

5. Procédé selon l'une quelconque des revendications 1 à 4, **caractérisé en ce que** la bande adhésive est mise à la longueur souhaitée, ensemble avec le cadre.

6. Procédé selon au moins l'une quelconque des revendications précédentes, **caractérisé en ce qu'**au moins une couche adhésive est réalisée à base de poly(diorgano)siloxanes.

7. Procédé selon au moins l'une quelconque des revendications 1 à 5, **caractérisé en ce qu'**au moins une couche adhésive présente, comme masse adhésive, une masse autoadhésive en polyuréthane silylé réticulant sous l'effet de l'humidité.

8. Procédé selon au moins l'une quelconque des revendications précédentes, **caractérisé en ce que** la bande adhésive présente en outre une couche de barrière et/ou un support, de préférence **en ce que** la couche de barrière forme le support.

9. Procédé selon la revendication 8, **caractérisé en ce qu'**au moins une deuxième couche adhésive est prévue et que les couches adhésives présentent une couche adhésive supérieure et une couche adhésive inférieure.

10. Procédé selon au moins l'une quelconque des revendications précédentes, **caractérisé en ce que** la couche polymère contenant l'agent de moussage présente, après le moussage, une épaisseur de couche dans la plage d'environ 100 µm à environ 3000 µm.
